# EUROPEAN PATENT APPLICATION

(11) **EP 1 433 585 A2**
(43) Date of publication of application: **30.06.2004**
(21) Application number: 04004949.6
(22) Date of filing: 18.10.2000
(51) Int. Cl.: B29C 45/14

(54) **A framed panel and its process of forming**

(30) Priority: 19.10.1999 US 160376 P
(62) Divisional of application: 00973663.8
(71) Applicant: SAMSONITE CORPORATION, Denver, Colorado 80239 (US)
(72) Inventor: Van Hoye, Willy, 9700 Oudenaarde (BE); Beedham, Martyn, London (GB); Demedts, Karel, 9700 Oudenaarde (BE)
(74) Representative: Neyret, Daniel

(57) **Abstract**

Disclosed is a process for forming a fabric panel for a broad face and a peripheral frame with injection molding. The edges of the fabric panel are attached to the injection molded frame by an autogenous bond formed between the edge of the panel and the plastic frame during molding. A framed panel is also disclosed.

## Description

### Field of the Invention:

The present invention relates to luggage cases made primarily by injection molding. More specifically, it relates to a method of making shell for luggage case having generally peripheral injection molded frame surrounding a light thin panel of a different material than that from which the injection molded frame is made.

### Background Art:

It is known to form a luggage case primarily of a molded laminate consisting of a cross linked polyethylene foam layer or core with a textile layer on the inside and a textile or thin plastic laminate on the outside. See for example British Patent Number 2002282 assigned to Superior S.A. This patent teaches that a frame could be attached to a concave luggage shell made of this laminate by gluing or by penetrating fasteners. A related patent, Canadian Patent 1,203,514 also assigned to Superior S.A., shows a more detailed proposal for such a luggage case. This luggage case comprises two shells of this thermoformed foam textile laminate with a shape stabilizing frame fastened to the inside periphery thereof. This frame is made of multiple pieces of injection molded plastic. The two shells are held together by a peripheral slide fastener or zipper. This patent does not teach how one could make a clamshell type opening case with relatively rigid matched frames. Nor does it suggest how one could position a panel of the polyethylene cross linked foam, or any other material for that matter, in an injection mold such that at least the edge portions of the foam and textile panel can be automatically adhered to the injection mold plastic formed in the injection mold. Another patent, European Patent Number 0309325 assigned to Etablissements M. Duret & Fils shows a method of manufacturing a car seat which consists of providing a panel of foam, textile, and metal spring layers which constitutes the main surface of the seat, and clamping the edges thereof in an injection mold. Nowhere however is it suggested that this process could be applied to making a luggage case.

US A 6,003,646 assigned to Patagonia Inc. discloses a luggage having an outer shell and a frame made by injection molding, with fabric panels or elements fixed to the frame by an autogenous bond using a radio frequency weld.

### SUMMARY OF THE INVENTION

Accordingly it is an object of this invention to provide a process for making a luggage case shell that eliminates the step of providing penetrating fasteners or the step of gluing in order to attach a textile or textile and foam panel to a surrounding plastic frame, thus saving cost or cost and weight associated with such an assembly steps.

It is a further object of the invention to provide a luggage case shell that comprises a substantially peripheral injection molded frame, this frame having upstanding sides to form the walls of the shell, and the base of the shell consisting of a panel made of textile or a textile and foam laminate, such that an edge of the panel is autogenously adhered to the surrounding peripheral frame. By the term autogenously, it is meant that the bond is formed by the materials in the panel already and the injection molding process without the necessity of adding adhesives or fasteners.

Further, the invention comprises a process for forming the shell of a luggage case from a textile web or panel. The panel is made of preferably of a foam panel and a fabric covering and has an edge portion and the luggage case further including a injection molded frame. The process comprises the steps of positioning the peripheral edge portion of the panel against an inside surface of an injection mold for forming the frame and injection of fluid plastic into the mold while maintaining the peripheral edge portion against an inside surface of the mold.

The subject invention also comprises a luggage case having at least a one outer shell. The shell in turn generally having a broad face formed of a fabric membrane. The improvement comprises an injection molded frame around the substantially entire periphery of the fabric membrane, and an autogenously formed bond between the frame and the fabric membrane.

The luggage made thereby is relatively light and amazingly strong for the amount of material used in its construction, partially as the result of the strong autogenous bond between the periphery of the panel and the injection molded frame. The cost of such an injection molded frame and panel combination is remarkably low, given the material and processing savings that result directly from the autogenesis bond.

### BRIEF DESCRIPTION OF THE FIGURES

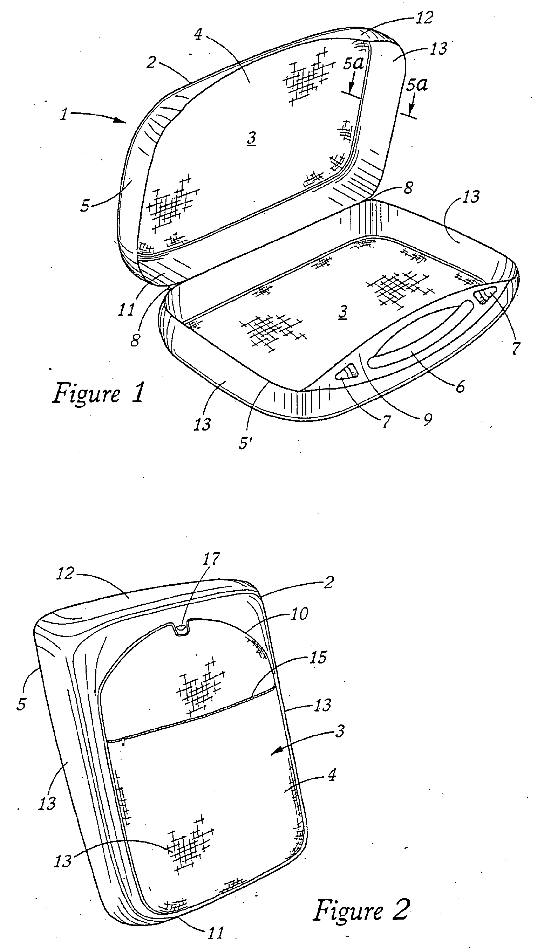

Figure 1 shows a luggage case shell together with its mating shell to form the outer construction of a luggage case.
Figure 2 shows a shell formed in accordance with the subject invention for use in the luggage of Figure 1.
Figure 3 is a cross section through the mating frames of a pair of luggage shells showing the overlapping tongue and groove mating between the frames and the bonded region between the inner edges of the frames and the edge region of the panels.
Figure 4 shows a schematic of one possible molding method to form an autogenous bond formed between the flexible panel and the injection molded frame.
Figures 5a and 5b are a cross section through a portion of the frame and panel showing the most preferred configuration for the autogenously bonded area.
Figure 6 shows a similar view of a slight variation of this most preferred configuration.
Figure 7 shows a luggage shell similar to that shown in Figure 3, but illustrating a further alternative of the bond or joint between the panel and the frame.
Figure 8a shows a simplified cross sectional view of the frame and panel in a portion of the injection mold for forming the frame portion of the shell.
Figure 8b and a side view graphically illustrating the a typical fill path taken by the molten thermoplastic in the injection mold at the edge portion of the injection molded frame.

### DETAILED DESCRIPTION OF THE PREFERRED EMBODIMENT

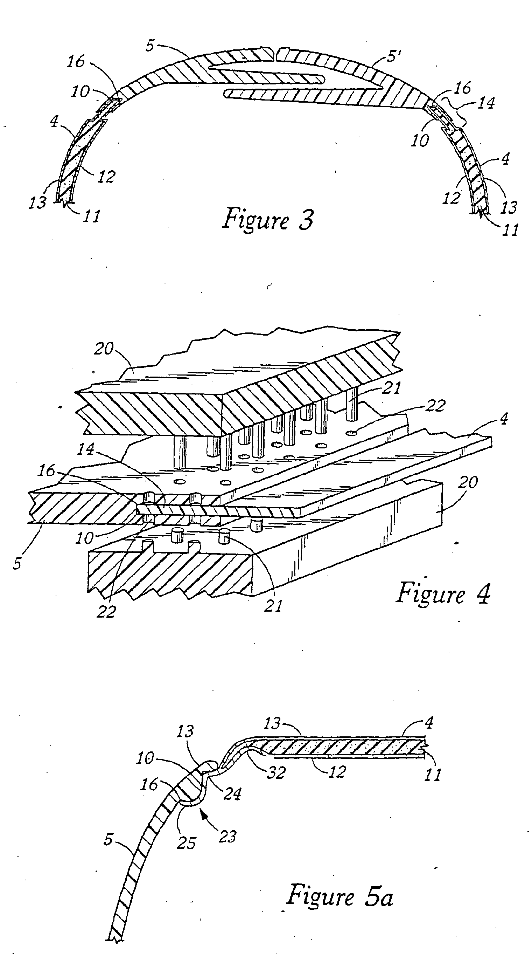

Referring to the figures, a luggage case 1 includes a shell that constitutes the outer construction of the luggage case. The shell 2 has a generally broad face 3, the broad face is formed of a membrane or panel 4 which could be a thin flexible polymer sheet, or even a single web of textile fabric, but most preferably is a fabric and foam laminate as will be detailed below. The single web of textile fabric could be the ribbon or edge of a slide fastener or zipper track to which could be fastened, via a mating zipper, a completed fabric textile panel or the like. Surrounding the panel 4 is an injection molded frame 5 that surrounds substantially the entire periphery of the flexible membrane. The frame 5 and mating frame 5' include overlapping edges which form a clamshell type closure (Figure 3) using known tongue and groove complementary edge shapes. The case further includes console member 9 which carries at least one carry handle 6 and a pair of latches 7 for selectively holding the frames 5 and 6 together to contain a travelers belongings. The case included a hinge device 8 of hinge knuckles integrally molded with the respecting frames known type. At the juncture of each frame and panel there is an autogenously formed bond 10 between the frame and the fabric membrane.

More particularly the injection molded frame comprises a series of upstanding walls that include a back wall 11, front wall 12, and side walls 13 extending between the back and front walls, that project up from the broad face or panel.

The joint or bond between the panel and the injection molded frame is shown in cross section in Figure 3. The flexible panel preferably is made of a combination of materials. This combination of materials comprises of a generally flat sheet of cross linked polyethylene foam 11 to which is bonded one or more layers of decorative and strength enhancing fabric 12, 13 preferably a woven textile. Such a material is well known in the art and the form could be made by silane crossed linked polyethylene in accordance with for example U.S. Patent Number 4, 591606, which patent, to the extent it is consistent with this description, is hereby incorporated by reference. The material can have the same characteristics and alternative covering textiles as recited in the previously mentioned patents assigned to Superior S.A. Suffice it to say that the flexible panel membrane or textile and foam laminate would be best preformed into a generally dome shaped or decorative configuration by known heat and pressure forming processes. The thus formed panel retains its general molded shape. The edge portions of the panel especially, if it is made of a foam and textile laminate, can be pinched to crushed to form a relatively stiff thin edge portion 14 as shown in Figure 3. This edge portion can be positioned to project into the injection mold cavity in a known manner and the cavity is filled with molten thermal plastic material, such as polyethylene, polypropylene and variations of these olefinic thermoplastics such as TPOs (thermal plastic olefins) or TPEs (thermal plastic elastomers). In any event, the peripheral frame provides a stiffening portion to stabilize the generally flexible nature of the panel and provide the beam strength necessary, especially along the side walls, to permit a fairly secure clamshell closure as set forth above. The panel in turn provides a tensile member or web between the adjacent and opposite walls of the frame lending its relatively high tensile strength (in comparison to its weight) to the overall construction. Unlike conventional one-piece injection molded shells, the panel also permits including a slide fastener 15 accessible opening or pocket for extra versatility. The fastener is easily attached to the panel using conventional sewing techniques, preferably prior to molding the frame to the peripheral edge of the panel. Of course one could apply other access and organizing features normally found in conventional soft textile constructed cases to the panel. Such features include one or more textile pockets sewn to the inside and outside surfaces of the panel. Such a feature laden panel could have a surrounding zipper track (not shown) for attaching to a zipper track bonded to the frame as suggested above. In this way, one could construct a fairly complex and feature laden panel, but only risk the incremental cost of the bonded zipper track, rather than the entire panel, if the molding process were to go wrong. A plate 17 or the like for displaying a company logo is conveniently located on the frame close on or adjacent to the joint 10. This serves the additional function of covering the mark made by the injection gate for the thermoplastic resin to form the shell. This will be detailed below.

Returning to the bond or juncture between the panel and the frame, it is preferred that the cut edge 16 should be hidden from the view of the consumer. This could be done by positioning the edge portion of the panel in the center of the injection mold and letting the plastic material while in its molten state flow around this cut or raw edge to hide the edge and give a more precise, aesthetically pleasing affect at the juncture. This trapping would also hide or prevent fraying of the threads at the cut portion of the fabric coverings. Figure 4 shows one method of assuring this consistent positioning. This comprises of providing each half of the injection mold 20 with a series of projecting pins 21 here shown schematically in a portion of the mold pulled away from the finished autogenous bond at the periphery edge portion of the panel. These pins engage and hold the edge of the panel in a precise location within the wall of the injection molded frame. However, this particular system while functionally adequate leaves substantial aesthetic concerns. The holes 22 left by the position pins could be perceived as a negative, perhaps suggesting that the finished frame has penetrations through which contaminates and moisture may reach the travelers goods.

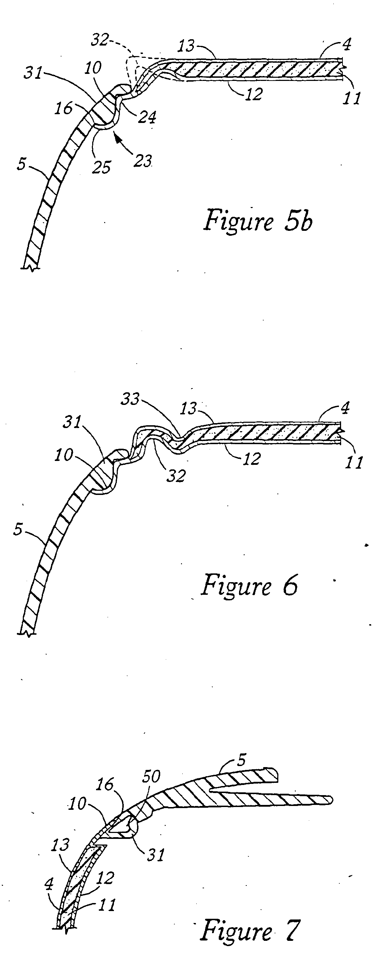

A most preferred construction consists of providing the stiffened edge portion of the panel with a distinctive roll or curl 23 (Figure 5) shown in cross section as having the shape of a J. In more detail, this edge portion includes a first outwardly projecting lip followed by a gently curving tail portion 25 which terminates at the raw or cut edge 16. In contrast with the pin positioning method illustrated in Figure 4, this panel edge portion is purposefully positioned against one of the inner surface 26 (in this case the inner frame defining walls) of the injection mold. Adjacent to this J portion the mold walls form an enlarged peripheral cavity 30 which inevitably forms a thicker edge section 31 of the frame. The mold portion 20' could preferably be in the form of a collapsing core. For certain shell shapes, such a collapsing core may be desirable to accommodate removing that portion of the mold from within the finished shell once the plastic material has hardened adequately. This is especially applicable for the larger sizes of finished luggage where it might be expedient to include an inwardly projecting rim to stiffen the outermost edge of such a larger shell. Collapsing core molds are a known expedient for molding complex shapes. Such techniques do not directly related to the inventive concept set forth herein.

This edge portion forms a thick section which tends to fill with plastic material during injection molding prior to the mold completely filling with plastic. It has been found that this especially thick portion is remarkably effective in maintaining the panel edge portion against the inner surface of the mold in this area and away from the more aesthetically demanding outer surface of the finished frame, resulting in a strong bond, and one that has a very consistent and desirable aesthetic. The outwardly curving portion part of the edge portion places the cut edge bluntly facing into but not necessarily imbedded in the mass of injection molded plastic. Thus the configuration in Figure 5 has the benefits of hiding the cut edge but does not have the disadvantage of requiring the positioning pins as discussed above.

Immediately adjacent to this bonded edge portion is the enlarged edge portion 31 of the injection molded frame. This is a smoothly curving portion which terminates at the juncture of the J edge portion detailed above and a continuous groove or invagination 32 which extends around the inside of the frame immediately adjacent to the edge portion of the panel. This invagination not only provides an immediate aesthetic advantage, as will be detailed, but also permits the relative differential shrinkage between the hot injection molded peripheral frame and the relatively dimensionally stable foam panel to accommodate one another in the cooling process. This is illustrated in Figure 5b. Here the injection molded frame has cooled substantially and in cooling has shrunk in all dimensions, but especially the peripheral dimension. The invagination has accommodated this shrinkage. The invagination creates a relatively weakened portion with regard to resisting the compressive forces applied by the cooling (and thus inwardly shrinking) frame. Thus the invagination has collapsed like the bellows of an accordion. This has permitted the rest of the foam panel to remain relatively undistorted by the frames thermal shrinkage. The foam panel would thus require no or very little post forming (that is, placing the panel and frame in a huge stabilizing mold to reform it into the desired concave shape).

Figure 6 shows an extension of this thermal shrinkage accommodating structure. Here a second invagination 33 is shown forming another collapsing or relatively weak portion in the foam panel.

The configuration in either Figure 5a, b or in Figure 6 permits an intimate, smooth bond between the injection molded frame and the panel, and yet provides that the panel outer surface is flush with the curving shape that forms a continuation of the curving shape of the frame walls. The injection molded plastic penetrates the surface of the panel, or conversely the crosslinked foam in this region forms an adhesive bond between the layers of textile and the injection molded plastic. Regardless, the bond has proven to be remarkably tough, adequate to resist bursting pressures associated with over packing the luggage case made thereby.

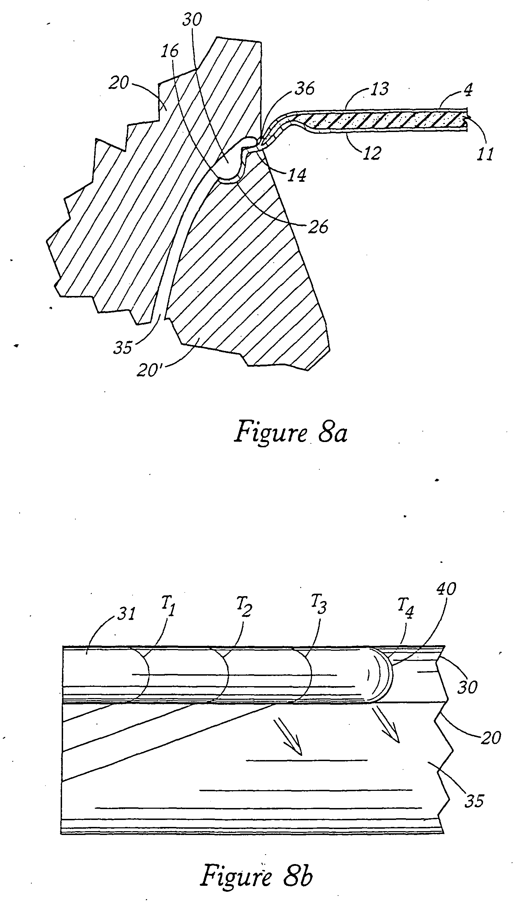

Figure 7 shows further alternative attachment of the panel to the peripheral injection molded frame. This process still uses the thick section to position the textile edge against one side of the injection mold. Here however the textile is positioned against that portion of the mold forming the outer surface of the injection molded frame rather than the inner surface of the injection molded frame. This configuration is less desirable in that the cut edge of the panel, while buried within or at least firmly adhered in the mass of injection molded plastic, is more exposed to snagging or the other rigors of travel than that illustrated in Figures 5A and B and Figure 6. Note that Figure 7 shows that the thick section includes a cavity 34. This illustrates the possibility of using gas injection, a widely used and common expedient for reducing the amount of molten plastic that remains in thick sections of injection molded parts. It should be understood, however, that the use of gas injection is not necessary to obtain the superior panel edge portion positioning central to a preferred execution of this invention.

Figure 8a shows a section through an edge portion of the injection mold, in particular at the location where the badge 17 would be placed in the final assembly of the case 1. Note the mold cavity formed between the mold halves provides a thin web portion 35 which constitutes most of the injection molded frame, and the thick section forming cavity 30 at the inner edge of the frame forming mold. All but the J portion of the panel remains free of the injection mold. The collapsed foam panel in this area forms a seal between the adjacent lips 36 of the closed mold halves. Plastic material is preferably injected into a point along this peripheral cavity 30 via channel 32. Note that the exit of this channel is directly opposite the J portion 23. It has been found that molten thermoplastic led into this thick section tends to fill the thick section around the periphery faster than it fills the thin web portion. Figure b includes a series of contour lines. These contour lines schematically represent the front or leading wave 40 of molten thermoplastic in various times T1 through T4 during the injection molding process. T1 shows that at particular point in time at any particular distance away from the injection molding point. Note that a relatively small portion the web is filled with plastic. However, because of the reduced back pressure presented by the thick portion a greater amount of the thick section is rapidly filled with plastic. At progressively later times T2, T3 and T4 this pattern of filling the thick portion first and the web portion later in the injection molding process continues. It is clear that because of the lower back pressure, the thermoplastic material first fills the thick section and then flows primarily from the filled thick section into the thin section. The cut edge and J portion of the flexible panel is positioned within this thick section against one wall thereof, in this case the wall forming an inner surface of the finshed shell. The molten thermoplastic wave or front first pushes the textile firmly against the mold wall by occupying most of the space in this thick section. Only at a later stage does the molten plastic flow into the thin wall or web portion of the frame. In so doing, the mass of thermoplastic in the thick section resists any movement of the textile material away from the adjacent wall of the injection mold. At the time the thermoplastic front begins to completely fill the injection mold cavity, internal pressures climb very high to complete packing the cavity. By that time however, the plastic material in the thick section has already become viscous enough to resist extruding from between the mold lips 36. This process assures a more consistent and precise transition between injection molded plastic and the panel without needing positioning pins projecting into the mold cavity. Also, this process allows an adequate the amount of textile material to project into the injection molding cavity without concern that the cut edge will be exposed through the solidified plastic. Thus, a relatively stronger attachment between the panel and the injection mold can be assured without compromising the aesthetic desirability of this joint area.

To avoid sink marks in this thick section and reduce the amount of thermoplastic and thus the weight of the finished case as well as to speed cooling time, it is desirable that a gas injection port provide gas to compensate for shrinkage as well as to accompany the wave front of the molten plastic into the thick sections. This is illustrated as stated above in the configuration shown in Figure 7, although this cored out or hollow section 50 provided by the gas could just as well be used in the configuration shown in Figures 5A and B and Figure 6. A fluid besides gas could be used to support this thick section, such as liquid such as water, which of course would have to be removed to reduce finished product weight. A blowing agent or a foamed plastic could also serve as the second fluid, as either would aid in filling the thick section prior to complete filling of the mold cavity as well as reducing molten plastic usage and reducing cycle times.

There are many additional benefits that derive from the luggage construction in method illustrated above. Benefits of weight reduction, cost reduction due to simplified process steps and increased strength due to the intimate and continuous autogenesis bond between the panel and the injection molded frame have already been discussed. In addition to these benefits over all prior constructions, the simplified construction and cost benefits of mass producing luggage by injection molding are well known. However, the construction of this invention reduces the internal mold pressures normally associated with the relatively large single piece injection molded shells of the typical luggage case. Secondly, the disclosed process permits the use of other injection moldable materials that would normally not be considered for use in making luggage cases. For example, a more viscous injection molding material such as one that Would filled with a strength enhancing material such as chopped fiber glass, nylon or more sophisticated engineering materials such as carbon and boron fibers could be used to form the frame. This is so since it would not be necessary for such flow resisting materials to flow into the panel portion of the case. Clearly, the panel portion of the case has already been provided by the flexible panel. While the preferred embodiment uses molten thermoplastic material, a reaction injection molding (RIM) material could be injected into the injection mold. The benefits of the thick section would apply equally well to such materials as it would in the illustrated process.

Alternative materials for the panel are also contemplated by this invention. The preferred material consists of a cross linked polyethylene foam core surrounded on the inside surface with a fine aesthetically pleasing textile on the outside by a tough woven or knitted high strength material or textile. Instead a calendared or sheet extruded web of TPO/TPE or a fully cross linked polymer or rubber could also be used. A single layer of strong textile could suffice as well, as long as the characteristics of the panel having such that it could be preformed into some shallow shape preferred for luggage and have an edge portion with a □J□ shape illustrated above, any such materials would suffice, although the foam and textile laminate has the advantages of extremely high strength and resiliency relative to its weight. A cross linked polypropylene foam or any other similar cross linked foam could also be used, although thermoplastic foam without crosslinking is preferred, since it presents better opportunities for recycling panels or panels and frame assemblies. Most preferred would be a foam that is compatible, both in terms of processing and recycling, with the material used to make the frame. Currently, the frame would best be molded of polypropylene, so the best foam would be of non-crosslinked polyolefin, specifically polypropylene.

While the preferred embodiment shows a peripheral frame surrounding a single flexible panel, the invention contemplates that the frame could surround more than one such panel or in the alternative, the frame could include cross bars or members that would divide a single panel into two or more relatively flat broad surfaces. Such a construction would be most desirable for extremely large cases whereas a stiffening bar made of the injection molded frame material could supply an extra amount of dimensional stability and a new aesthetic as well.

## Claims

1. A framed panel having a generally broad face, this broad face formed of a fabric panel, the framed panel further comprising an injection molded frame (5) attached to an edge of the fabric panel, and an autogenously formed bond between the frame (5) and the fabric panel, which was formed during the injection molding of the frame.

2. A framed panel of claim 1 having a series of walls upstanding from the broad face, the injection molded frame (5) integrally forming the series of upstanding walls.

3. A framed panel of claim 2 wherein the upstanding series of walls consist of a back wall (11), a front wall (12), and side walls extending between the front wall and the back wall.

4. A framed panel of claim 3 wherein the back wall (11) includes integrally formed hinge knuckles for hingedly attaching the back wall (11) to another structure.

5. A framed panel of claim 2 wherein the front wall (12) includes at least one latching device for selectively holding the framed panel (2) to another structure.

6. A framed panel of claim 1 wherein the panel further includes a layer of textile fabric (13) and a layer of foam polymer (11) to stiffen the textile fabric layer.

7. A framed panel of claim 1 wherein the bond between the frame (5) and fabric panel (13) extends around substantially the entire periphery of the panel.

8. A framed panel of claim 6 wherein the fabric (13) and the foam layer (11) are laminated to one another to form a laminated panel, the perimeter of the panel having peripheral edge portion upstanding from the major dimension of the laminated panel, the extreme edge of the edge portion having a cut edge, the cut edge being hidden by the injection molded frame attached thereto.

9. A framed panel of claim 7 wherein the laminated panel has a thickness dimension perpendicular to the major dimension and generally equal to the thickness of the fabric (13) and the foam layer (11), but the thickness of the extreme edge thereof being substantially less than the thickness dimension.

10. A framed panel of claim 2 wherein the frame (2) further includes a thick section adjacent the series of walls, the thick section including the autogenous bond.

11. A process of forming a framed panel (2) from a panel having a peripheral edge portion, said panel comprising at least a fabric covering, and an injection molded frame (5), comprising the steps of positioning the peripheral edge portion inside an injection mold cavity for forming the frame (5), and injecting plastic material into the mold cavity to form an autogenous bond between the plastic material and the edge portion.

12. A process of forming a framed panel as set forth in claim 11 wherein the step of positioning includes holding the edge portion against an inside surface of an injection mold .for forming the frame (5), and injecting fluid plastic into the mold cavity while maintaining the peripheral edge portion against the inside surface of the mold cavity.

13. A process of forming a framed panel (2) as set forth in Claim 12 wherein the inside surface of the mold cavity is a surface that forms an inside surface of the finished framed panel.

14. A process of forming a framed panel (2) as set forth in Claim 12 including leading the plastic material to a portion of the mold cavity adjacent to the peripheral edge portion before substantially filling the mold cavity with plastic material, whereby the plastic material adjacent the peripheral edge portion helps to maintain the peripheral edge portion against the inside surface of the mold cavity.

15. A process of forming a framed panel (2) as set forth in claim 14 further including supplying a mold cavity having a portion thereof sized to create relatively thin web portions of the frame, and a thick portion immediately adjacent to the peripheral edge portion, and introducing the plastic material into the mold cavity at the thick portion, whereby the plastic material preferentially fills the thick portion prior to filling the remainder of the mold cavity.

16. A process of forming a framed panel (2) as set forth in claim 15 further including the step of introducing into the thick portion a second fluid along with the plastic material, whereby a hollow section is formed in the thick portion of the completed framed panel (2).

17. A process of forming a framed panel (2) as set forth in claim 16 wherein the second fluid is a gas.

18. A process of forming a framed panel (2) as set forth in claim 16 wherein the second fluid is a blowing agent.

19. A process of forming a framed panel (2) as set forth in claim 11, wherein the panel further includes a layer of foam (11) laminated to one side of the fabric covering.

20. A process of forming a framed panel (2) as set forth in claim 19, wherein the panel further includes a layer of fabric laminated to a side of the layer of foam (11), whereby the layer of foam (11) is positioned between the fabric covering and the layer of fabric.
